# EUROPEAN PATENT APPLICATION

(11) **EP 2 159 865 A1**
(43) Date of publication of application: **03.03.2010**
(21) Application number: 09010441.5
(22) Date of filing: 05.09.2006
(51) Int. Cl.: H01M 8/06, H01M 8/04

(54) **Arrangement for supplying a fuel cell with recycled reaction gas**

(30) Priority: 06.09.2005 DE 102005042407; 07.09.2005 US 714920 P
(62) Divisional of application: 06805650.6
(71) Applicant: Carl Freudenberg KG, 69469 Weinheim (DE)
(72) Inventor: Huecker, Verena, 69469 Weinheim (DE); Leister, Klaus, 69469 Weinheim (DE)

(57) **Abstract**

Arrangement (1) for supplying a fuel cell (2) with recycled reaction gas (3) comprising a humidifier (4) with a first inlet (5) for the reaction gas (3) to be humidified and a second inlet (6) for the moisture carrier (7) whereby a filter arrangement (8) is connected in front of the first inlet (5) and/or the second inlet (6) **characterised in that** a gas conveying facility (15) is connected in front of the arrangement (1).

## Description

### TECHNICAL FIELD

The invention relates to an arrangement for supplying a fuel cell with recycled reaction gas, comprising a humidifier with a first inlet for the reaction gas to be humidified and a second inlet for the moisture carrier, whereby a filter arrangement is connected in front of the first inlet and/or the second inlet.

### STATE OF THE ART

Such arrangements are known in general, In the case of certain types of fuel cells such as e,g. polymer electrolyte membrane fuel cells (PEM cells), permanent humidifying of the fuel cell membrane is necessary to achieve the maximum degree of effectiveness. Humidifying takes place by enriching the gas supplied to the fuel cell with water, the enrichment taking place by means of a humidifier. For the humidifier to reach an optimum degree of effectiveness and the moisture transfer to be controllable, an even supply flow is required. For this purpose, a gas conveying facility is frequently connected in front of the humidifier. However, gas conveying facilities operating in surges are in existence such that the supply stream to the humidifier can not be homogeneous. Moreover, pressure surges may lead to premature wear and tear. Frequently, only a limited amount of structural space is available for the humidifier resulting frequently in an unfavourable, e.g. skewed or asymmetrical, supply stream.

### DESCRIPTION OF THE INVENTION

The invention is based on the task of providing an arrangement in the case of which the supply stream to the humidifier is improved.

To achieve this task, a gas convenying facility is connected in front of the arrangement. The filter arrangement has the form of a particle filter, e.g. of a non-woven material, and forms a pressure equaliser which results in smoothing of the flow. This arrangement is advantageous in particular in the case of mobile applications since mobile fuel cells are operated dynamically and consequently operationally caused pressure variations may occur; the same applies also to compact stationary facilities. Possible pressure surges of a pre-connected gas conveying facility are attenuated in the filter arrangement. By a smoothed supply stream to the humidifier, the transfer of moisture is improved such that a small structural space requirement can be achieved. The filter arrangement can exhibit a wire netting, woven fabric, perforated lattice or diaphragms. These facilities lead to a further improved flow apart from having a support effect for the filter arrangement. Preferably, the filter arrangement has the form of a particle filter. This is used to filter particles capable of leading to premature wear and tear or loss of effectiveness of the humidifier. In this case, the ambient air which is supplied to the fuel cell as reaction gas on the cathode side is purified, on the one hand, and the cathode off-gas forming the moisture carrier can also be purified, on the other hand. The cathode off-gas can contain contaminants from the fuel cell which are retained in the filter arrangement such that purified cathode off-gas is supplied to the humidifier. By means of the gas conveying facility, an increase in pressure and conveying of the gas stream take place. Depending on the equipment of the gas conveying facility, pressure surges may occur which are attenuated in the filter arrangement connected in front of the humidifier. Membrane pumps are frequently used as gas conveying facilities since the medium to be conveyed is completely encapsulated in the case of these. However, pressure pulsations occur in the case of a membrane pump which are attenuated in the filter arrangement such that the flow supplied to the humidifier is homogeneous and, as a result, reaches and optimum degree of effectiveness and is satisfactorily controllable.

A pre-filter can be connected in front of the air conveying facility. The pre-filter prevents the penetration of particles into the gas conveying facility and the arrangement as well as premature wear and tear.

A sound absorber may be connected in front of the air conveying facility. Sound emissions which are caused in particular by the gas conveying facility are prevented by the sound absorber.

The reaction gas may form the cathode gas of the fuel cell. The oxygen-containing medium, e.g. ambient air the case of PEM fuel cells, is supplied to the cathode. Although the supply of water to the cathode side does not exhibit the effectiveness of the supply to the anode side, it is technically simpler since the cathode waste air can be utilised safely for humidifying.

The filter arrangement may comprise a chemical filter. A chemical filter filters e.g. acidic and/or basic gases and prevents premature wear and tear of the humidifier and the fuel cells by the effect of damaging gases.

The filter arrangement may comprise a layer of activated carbon. The filter arrangement then comprises a particle filter and an activated carbon filter which may be combined to form one filter unit. The further filter arrangement may comprise an activated carbon layer. In this case, the activated carbon forms an adsorption filter and/or an absorption filter, depending on the equipment. Activated carbon is suitable for filtering widely differing chemical components and particles. Instead of or additionally to activated carbon, other sorbents may also be provided in the further filter arrangement. These may act also by physisorption and/or chemisorption. Impregnated carbon, silicon dioxide, aluminosilicates, aluminium oxides or an ion exchanger, for example, are conceivable.

The filter arrangement may comprise a fine filter. By means of a fine filter, fine particulate and liquid components may be filtered from the medium to be purified. An activated carbon layer may be connected to the fine filter downstream and also retain activated carbon particles.

The filter arrangement may comprise an electrostatically effective filter layer. Fine particles can be filtered with an electrostatically effective filter material with a low pressure loss. As a result of the electrostatic interaction, the pores may be formed larger with the same filter performance than in the case of a non-charged filter material. Filter media may be arranged by simple means in the gas stream and are easily replaceable.

### SHORT DESCRIPTION OF THE DRAWINGS

Some practical examples of the arrangement according to the invention will be explained in further detail below by way of the figures. These show diagrammatically in each case:
- Fig. 1: the arrangement according to the invention for humidifying the cathode gas;
- Fig. 2: an arrangement with an additional filter arrangement for purifying the cathode off-gas;
- Fig. 3: an arrangement with a pre-filter and a sound absorber connected in front;

### EXECUTION OF THE INVENTION

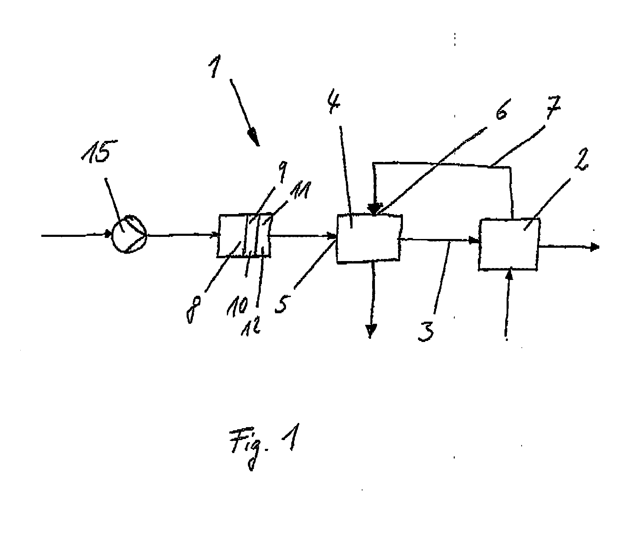

Figure 1 shows an arrangement 1 for supplying a fuel cell 2 with recycled reaction gas 3. The reaction gas 3 is ambient air in the case of this design which is supplied to the fuel cell 2 on the cathode side. The arrangement 1 consists of a humidifier 4 formed as membrane humidifier with a first inlet 5 and second inlet 6. In the first inlet 5, the reaction gas to be humidifier 3 and in the second inlet 6 the moisture carrier 7 are introduced into the humidifier 4. The moisture carriers 7 is formed by the water-containing cathode waste air. In the case of this design, a filter arrangement 8 is connected in front in the first inlet 5. The filter arrangement 8 is formed as a particle filter and consists of a non-woven material formed as a flat surface. The filter arrangement 8 exhibits additionally to the layer of non-woven material a chemical filter 9 which is formed by a layer of activated carbon 10. Moreover, the filter arrangement exhibits a fine filter 11 which is formed by an electrostatically effective filter material 12. A gas conveying facility 15 formed as a membrane pump is connected in front of the arrangement 1.

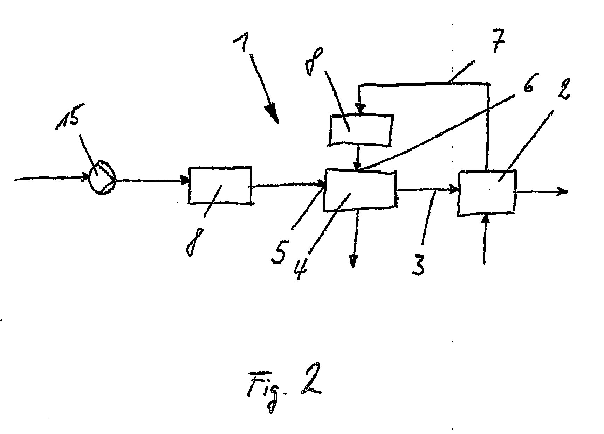

The arrangement 1 according to Figure 2 corresponds to the arrangement 1 from Figure 1, an additional filter arrangement 8 being connected in front of the second inlet 6 in the case of this design. The cathode off-gas which is formed by the moisture carrier 7 is purified by the additional filter arrangement.

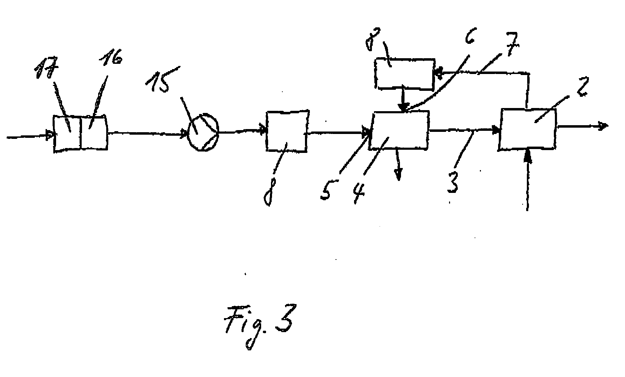

Figure 3 shows an arrangement 1 according to figure 2, a pre-filter 16 being connected in front of the gas conveying facility 15, which pre-filter is combined with a sound absorber 17. As a result of the small space requirement, this arrangement is suitable in particular for mobile applications.

## Claims

1. Arrangement (1) for supplying a fuel cell (2) with recycled reaction gas (3) comprising a humidifier (4) with a first inlet (5) for the reaction gas (3) to be humidified and a second inlet (6) for the moisture carrier (7) whereby a filter arrangement (8) is connected in front of the first inlet (5) and/or the second inlet (6) **characterised in that** a gas conveying facility (15) is connected in front of the arrangement (1).

2. Arrangement according to claim 1 **characterised in that** a pre-filter (16) is connected in front of the gas conveying facility (15).

3. Arrangement according to claim 1 or 2 **characterised in that** a sound absorber (17) is connected in front of the gas conveying facility (15).

4. Arrangement according to one of claims 1 to 3 **characterised in that** the reaction gas (3) forms the cathode gas of fuel cell (2).

5. Arrangement according to claim 1 **characterised in that** the filter arrangement (8) comprises a particle filter.

6. Arrangement according to claims 1 or 2 **characterised in that** the filter arrangement (8) comprises a chemical filter (9).

7. Arrangement according to one of claims 1 to 3 **characterised in that** the filter arrangement (8) comprises an activated carbon layer (10).

8. Arrangement according to one of claims 1 to 4 **characterised in that** the filter arrangement (8) comprises a fine filter (11).

9. Arrangement according to claim 5 **characterised in that** the filter arrangement (8) comprises an electrostatically effective filter layer (12).
